# EUROPEAN PATENT APPLICATION

(11) **EP 4 799 980 A1**
(43) Date of publication of application: **02.09.2026**
(21) Application number: 24882433.6
(22) Date of filing: 24.10.2024
(51) Int. Cl.: C01G 35/00, C01G 35/02, H01B 1/06

(54) **METHOD FOR PRODUCING PYROCHLORE-TYPE OXIDE**

(30) Priority: 25.10.2023 JP 2023183092
(71) Applicant: DENSO CORPORATION, Kariya-city, Aichi 448-8661 (JP)
(72) Inventor: ONODERA, Hitoshi, Kariya- city, Aichi 4488661 (JP); YOSHIDA, Shuhei, Kariya- city, Aichi 4488661 (JP); SHIMONISHI, Yuta, Kariya- city, Aichi 4488661 (JP)
(74) Representative: TBK
(86) International application number: PCT/JP2024/037864
(87) International publication number: WO 2025/089322

(57) **Abstract**

A method for producing a pyrochlore-type oxide containing a plurality of cations, including an alkali metal cation, in a composition, includes a mixing process (S10, S20) in which a plurality of raw materials, each containing one of the plurality of cations, are mixed, and a heating process (S11, S21) in which a mixture containing the plurality of raw materials is heated by a liquid-phase method at a predetermined temperature to generate a composite oxide having a corundum structure and containing at least the alkali metal cation in a composition.

## Description

### CROSS REFERENCE TO RELATED APPLICATION

This application is based on Japanese Patent Application No. 2023-183092 filed on October 25, 2023, the disclosure of which is incorporated herein by reference.

### TECHNICAL FIELD

The present disclosure relates to a method for producing a pyrochlore-type oxide.

### BACKGROUND ART

Non-Patent Literature 1 describes a method for producing a pyrochlore-type oxide, in which a precursor composed of a lithium-containing complex oxide is mixed with raw materials including LiF and LaF₃ and, when the precursor contains Ta, the mixture is calcined at 1200°C.

### PRIOR ART LITERATURES

### NON-PATENT LITERATURE

Non-Patent Literature 1: Cyrille Galven et al., New Oxyfluoride Pyrochlores Li2-xLa(1+x)/3□(2x-1)/3B2O6F (B=Nb, Ta): Average and Local Structure Characterization by XRD, TEM and 19F Solid-State NMR Spectroscopy, European Journal of Inorganic Chemistry, Germany, October 11, 2010, No. 33, pp. 5272-5283.

### SUMMARY OF INVENTION

However, in the production method of the above prior art, the calcination temperature is high, causing the particles of the resulting pyrochlore-type oxide to undergo grain growth and become coarser. For example, when a pyrochlore-type oxide is used as a solid electrolyte for secondary batteries, it is desirable to make a solid electrolyte layer as thin as possible in order to reduce resistance, and therefore it is preferable to refine the particles of the pyrochlore-type oxide.

In view of the above, the present disclosure aims to provide a method for producing a pyrochlore-type oxide that enables the refinement of pyrochlore-type oxide particles.

To achieve the above object, one aspect of the present disclosure provides a method for producing a pyrochlore-type oxide containing a plurality of cations, including an alkali metal cation, in a composition, including a mixing process and a heating process. The mixing process includes mixing a plurality of raw materials each containing one of the plurality of cations. The heating process includes heating a mixture containing the plurality of raw materials at a predetermined temperature by a liquid-phase method to produce a composite oxide having a corundum structure and containing at least the alkali metal cation in a composition.

As a result, in the heating process, the composite oxide with the corundum structure produced by the liquid-phase method can further react to generate a pyrochlore-type oxide. With the liquid-phase method, a pyrochlore-type oxide can be produced at a lower temperature compared to solid-phase reactions, and by lowering the heating temperature, the particles of the pyrochlore-type oxide can be made finer.

### BRIEF DESCRIPTION OF DRAWINGS

FIG. 1 is a cross-sectional view showing a configuration of a secondary battery according to a first embodiment.
FIG. 2 is a diagram showing a crystal structure of a pyrochlore-type oxide.
FIG. 3 is a diagram showing a method for producing a pyrochlore-type oxide according to the first embodiment.
FIG. 4 is an SEM image of the pyrochlore-type oxide according to the first embodiment.
FIG. 5 is a diagram showing particle sizes of pyrochlore-type oxides according to the first embodiment, using examples and a comparative example.
FIG. 6 is a diagram showing a method for producing a pyrochlore-type oxide according to a second embodiment.
FIG. 7 is an SEM image of the pyrochlore-type oxide according to the second embodiment.
FIG. 8 is a diagram showing particle sizes of pyrochlore-type oxides according to the second embodiment, using examples and a comparative example.

### DESCRIPTION OF EMBODIMENTS

The following will describe embodiments for carrying out the present disclosure with reference to the drawings. In each embodiment, portions corresponding to the elements described in the preceding embodiments are denoted by the same reference numerals, and redundant explanations may be omitted. When only a part of a configuration is described in an embodiment, another preceding embodiment may be applied to the other parts of the configuration. In addition to the combinations of parts specifically shown in the respective embodiments, the embodiments can be partly combined even if not explicitly suggested, unless such combinations are contradictory.

### (First Embodiment)

Hereinafter, a first embodiment in which a pyrochlore-type oxide of the present disclosure is applied to a solid electrolyte for a secondary battery will be described with reference to the drawings. A secondary battery 10 of the first embodiment is a lithium-ion battery in which charging and discharging are performed by the movement of lithium ions between a negative electrode 12 and a positive electrode 14.

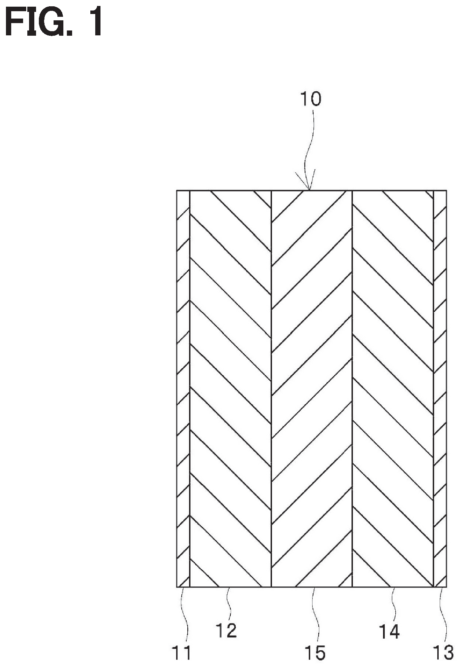

As shown in FIG. 1, the secondary battery 10 includes a negative electrode current collector 11, the negative electrode 12, a positive electrode current collector 13, the positive electrode 14, and a solid electrolyte 15. The solid electrolyte 15 corresponds to the solid electrolyte for the secondary battery.

The solid electrolyte 15 is sandwiched between the positive electrode 14 and the negative electrode 12. The negative electrode 12 and the solid electrolyte 15 are in contact with each other. The positive electrode 14 and the solid electrolyte 15 are in contact with each other. The negative electrode 12 and the positive electrode 14 are connected through the solid electrolyte 15. The secondary battery 10 of the first embodiment is a lithium-ion battery in which charging and discharging are performed by the movement of lithium ions between the negative electrode 12 and the positive electrode 14 through the solid electrolyte 15.

A stacked body including the negative electrode 12, the positive electrode 14, and the solid electrolyte 15 is disposed between the negative electrode current collector 11 and the positive electrode current collector 13. The negative electrode current collector 11 and the negative electrode 12 are in contact with each other. The positive electrode current collector 13 and the positive electrode 14 are in contact with each other. The negative electrode current collector 11 and the positive electrode current collector 13 are connected through the stacked body.

Any material that can be used as a current collector for a lithium ion battery can be used for the negative electrode current collector 11 and the positive electrode current collector 13. In the first embodiment, Cu is used as the negative electrode current collector 11, and Al is used as the positive electrode current collector 13.

A negative electrode material constituting the negative electrode 12 can be any material that can be used as a negative electrode active material for lithium ion batteries, such as a carbon-based negative electrode material, an oxide-based negative electrode material, or a metal-based negative electrode material. In the first embodiment, a lithium-based negative electrode material or a silicon-based negative electrode material is used.

A positive electrode material constituting the positive electrode 14 can be any material that can be used as a positive electrode active material for lithium ion batteries. As the positive electrode 14, for example, a cobalt-based positive electrode material (LiCoO₂), a nickel-based positive electrode material (LiNiO₂), a manganese-based positive electrode material (LiMn₂O₄), an iron phosphate-based positive electrode material (LiFePO₄), a ternary positive electrode material (NMC) mainly composed of nickel, manganese, and cobalt, and the like can be used.

The solid electrolyte 15 has ion conductivity and is capable of moving lithium ions between the negative electrode 12 and the positive electrode 14. It is desirable that the solid electrolyte 15 be formed as thin as possible in order to reduce the resistance of the secondary battery 10.

The solid electrolyte 15 is an oxide-based solid electrolyte, and is a pyrochlore-type oxide having a pyrochlore structure represented by the composition formula "Aa_{2-α}Ab_{(1+α)/3}B₂O_{7-β}X_{γ}". In order to make the solid electrolyte 15 as thin as possible, it is desirable that the pyrochlore-type oxide constituting the solid electrolyte 15 have a particle diameter as small as possible. The pyrochlore-type oxide of the first embodiment has a primary particle size on the order of nanometers to micrometers, specifically in the range of 20 nm to 10 µm.

The particle diameter of the pyrochlore-type oxide refers to the length of the largest part of the particle, and may also be referred to as the maximum diameter or the major axis. In the first embodiment, the mode (peak value) of the particle size distribution is used as the particle diameter. The particle diameter of the pyrochlore-type oxide can be obtained as follows.

The geometric shape of the particles is observed using an electron microscope (SEM, TEM) or an atomic force microscope (AFM), and the maximum diameter of the particles to be measured is determined. The number of measurement samples, N, is set to 30 or more, for example. The mode, estimated by assuming that the distribution of the maximum diameters of the measured particles follows a log-normal distribution, is taken as the particle diameter.

In the above composition formula, O is an oxygen atom, and Aa, Ab, B, and X represent any element or group. Aa, Ab, and B are different types of cations, while O and X are different types of anions. Aa is an alkali metal cation. The pyrochlore-type oxide contains multiple cations in its composition, including an alkali metal cation Aa and multiple cations Ab and B that are different from the alkali metal cation Aa. In other words, the pyrochlore-type oxide contains multiple cations in its composition, including an alkali metal cation Aa.

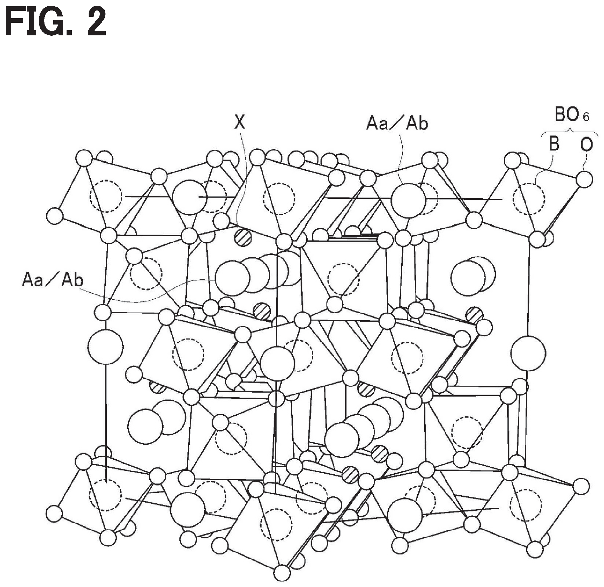

As shown in FIG. 2, the solid electrolyte 15 with a pyrochlore structure has a crystal structure in which a three-dimensional network of octahedra composed of BO₆ is formed. BO₆ consists of a cation B at the center with O positioned at the vertices, and it shares vertices with adjacent BO₆. In the three-dimensional network consisting of BO₆, a hexagonal tunnel structure is formed where cation A and anion X are positioned.

In the above composition formula, 0.6<α<2.0, 0<β≤1, and 0<γ≤1. When α changes, the composition ratio of Aa and Ab changes, and when β changes, the composition ratio of O and X changes.

Cation Aa is an alkali metal cation. As the alkali metal represented by Aa, any one of Li, Na, K, Rb, or Cs can be used. As the cation Aa, Mg or H, which are not alkali metals, may also be used. In other words, the cation Aa includes at least one selected from Li, Na, K, Rb, Cs, Mg, and H. In the first embodiment, Li is used as Aa. The composition ratio (2-α) of Aa is in the range of 0<(2-α)<1.4.

The cation Ab includes at least a lanthanoid. As the lanthanoid represented by Ab, at least one of La, Ce, Nd, and Sm can be used. In the first embodiment, La is used as Ab. The composition ratio (1+α)/3 of Ab is in the range of 0.53<(1+α)/3<1.

The basic structure of the cation Ab consists of a lanthanoid. However, a portion of the lanthanoid constituting Ab may be substituted with an alkaline earth metal (such as Ca, Mg, or Sr). In the solid electrolyte 15 of the first embodiment, in the above composition formula, 0.6<α<2.0 and 0<β≤1, and it is considered that the inclusion of a lanthanoid in the pyrochlore structure causes defects in the crystal structure, thereby improving the ionic conductivity. In the first embodiment, La is used as Ab.

In the solid electrolyte 15 of the first embodiment, the cation A in the general pyrochlore structure composition formula "A₂B₂O₇" is a composite cation composed of lithium metal and a lanthanoid. This is considered to contribute to the improvement of the ionic conductivity of the solid electrolyte 15.

The cation B is a metal cation different from Aa and Ab, selected from transition metals or metals from groups 13 to 15. B forms an octahedron surrounded by six O atoms within the crystal. As the transition metal represented by B, a group 4 or group 5 transition metal can be used, and more specifically, at least one of Nb, Ta, Ti, Zr, Hf, or V can be used. As the group 13 element represented by B, Al, Ga, or In can be used. As the group 14 element, Ge or Sn can be used. As the group 15 element, Sb or Bi can be used. In the first embodiment, Ta is used as B.

The anion X is an anion that can substitute for the O atoms constituting the pyrochlore structure. X has different electronegativity and polarizability compared to the O atom. As the anion represented by X, at least one of O, F, Cl, Br, I, S, OH, or P can be used. The composition ratio γ of X falls in the range of 0<γ≤1, and at least a portion of the O atoms constituting the pyrochlore structure is substituted with X. In the first embodiment, F is used as X.

The solid electrolyte 15 of the first embodiment has a defect structure in which part of the O atoms constituting the pyrochlore structure are substituted with anions that differ from O atoms in electronegativity and polarizability, thereby introducing lattice defects into the crystal. It is considered that the solid electrolyte 15 of the first embodiment exhibits improved ionic conductivity due to the inclusion of the defect structure in the pyrochlore structure.

In the solid electrolyte 15 of the first embodiment, the defect structure is such that a portion of Aa and Ab is deficient. The composition formula for the general pyrochlore structure is "A₂B₂O₇", and the compositional ratio of the cation A is 2. In contrast, in the solid electrolyte 15 of the first embodiment, the composition ratios of Aa and Ab are "2-α" and "(1+α)/3," respectively, and since 0.6<α<2.0, the total composition ratio of Aa and Ab is less than 2. In other words, in the crystal structure of the solid electrolyte 15 of the first embodiment, at least a portion of either Aa or Ab is deficient. A composition ratio corresponding to the deficient part of Aa and Ab is (2α-1)/3.

In addition to the deviation of the composition ratio, the defect structure can also be formed by making a sum of valences of the cations including Aa, Ab and B and the anions including O and X negative in the above composition formula.

Furthermore, the solid electrolyte 15 of the first embodiment is a composite anionic compound in which multiple anions, such as O and X, are included in the pyrochlore structure. Because the anion represented by X is present in the BO₆ coordinated octahedral structure, the alkali metal of Aa can be positioned at the center of the space between the BO₆ coordinated octahedra without being attracted to the BO₆ coordinated octahedra. Therefore, it is considered that the solid electrolyte 15 of the first embodiment exhibits high ionic conductivity when used in an electric field such as a battery.

Additionally, since α, β, and γ in the above compositional formula affect lattice defects and ionic conductivity, it is desirable to set α, β, and γ within an appropriate range. When the values of α, β, and γ are large, the defect concentration in the crystal lattice increases. However, if these values exceed a certain amount, the concentration of the alkali metal represented by Aa decreases, leading to a reduction in ionic conductivity. Thus, it is desirable to control α within the range of 0.6<α<2.0, β within the range of 0<β≤1, and γ within the range of 0<γ≤1.

In the first embodiment, a pyrochlore-type oxide represented by "Li_{1.25}La_{0.58}Ta₂O₆F" or "Li_{1.25}La_{0.58}Nb₂O₆F" is used as the solid electrolyte 15. In other words, Li is used as the Aa cation, La is used as the Ab cation, Ta or Nb is used as the B cation, and F is used as the X anion, with α=0.75, β=1, and γ=1. Hereinafter, "Li_{1.25}La_{0.58}Ta₂O₆F" is also referred to as "LLTOF," and "Li_{1.25}La_{0.58}Nb₂O₆F" is also referred to as "LLNOF."

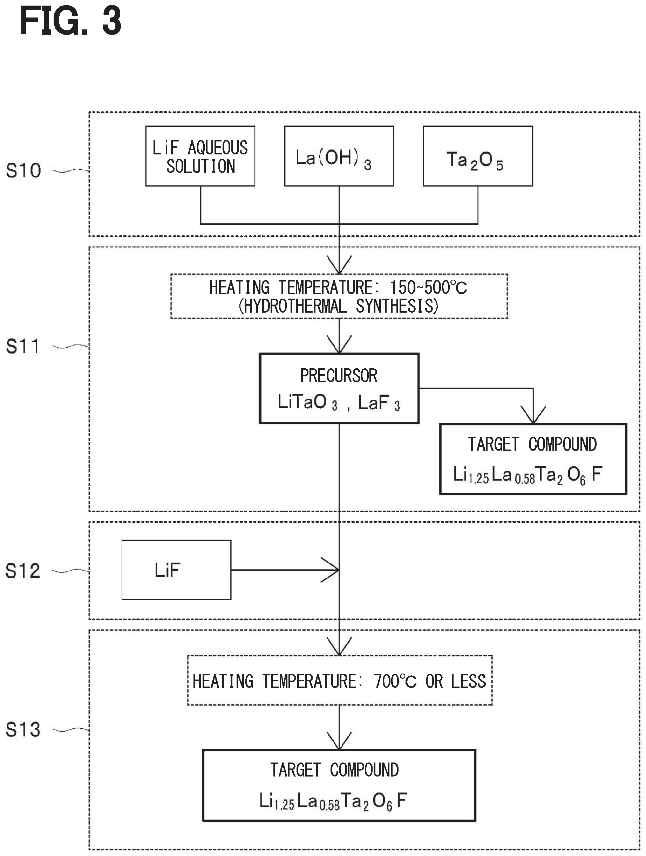

Next, a method for producing the solid electrolyte 15 of the first embodiment will be described with reference to FIG. 3. FIG. 3 shows the method for producing LLTOF. In the method for producing the solid electrolyte 15, a first mixing process S10, a first heating process S11, a second mixing process S12, and a second heating process S13 are performed in this order. The first mixing process S10 and the first heating process S11 correspond to a mixing process and a heating process, respectively.

### (First Mixing Process)

In the first mixing process S10, a plurality of raw materials each containing one of the cations included in the target compound LLTOF are mixed to obtain a mixture. The plurality of raw materials mixed in the first mixing process S10 include a lithium source, a lanthanum source, and a tantalum source. The lithium source is a raw material for the cation Aa and is an alkali metal compound. The lanthanum source is a raw material for the cation Ab, and the tantalum source is a raw material for the cation B. As the lithium source, the lanthanum source, and the tantalum source, at least one substance selected from a group consisting of fluorides, acetates, chlorides, hydroxides, carbonates, and oxides can be used. In the first embodiment, LiF is used as the lithium source, La(OH)₃ is used as the lanthanum source, and Ta₂O₅ is used as the tantalum source. In the first embodiment, a fluoride is used as the alkali metal compound, and LiF also serves as the fluorine source. It should be noted that, in the case of producing LLNOF, a niobium source Nb₂O₅ may be used instead of the tantalum source Ta₂O₅.

The alkali metal compound used in the first embodiment is water-soluble, and LiF is used in the form of an aqueous solution (dissolved solution). The dissolved LiF is ionized in the aqueous solution. In the LiF aqueous solution, it is not necessary for the entire amount of LiF to be dissolved; it is sufficient if at least a portion of the LiF is dissolved. In the first mixing process S10, particles of La(OH)₃ and Ta₂O₅ are mixed into the LiF aqueous solution at a predetermined ratio. In the first mixing process S10, the mixture is obtained in the form of a mixed solution. The mixed solution is adjusted to be alkaline by the dissolution of LiF. By making the mixed solution alkaline, the reactivity of hydrothermal synthesis in the first heating process described later can be enhanced, thereby improving the yield of precursors.

In the first embodiment, the amount of Li supplied as LiF is set to be in excess of the stoichiometric amount required for the target compound LLTOF. In other words, the mixture contains an amount of Li in excess of that required for the target compound. The excess amount of Li can be, for example, 50 to 100 mol%. By making the amount of Li excessive, the pH of the mixed solution can be increased, which enhances the reactivity.

### (First Heating Process)

Next, the first heating process S11 is performed in which the mixed solution obtained by mixing La(OH)₃ and Ta₂O₅ into the LiF aqueous solution is heated. In the first heating process S11, the mixed solution is heated at a predetermined temperature by a liquid-phase method under an atmospheric or inert atmosphere to produce the precursors.

The liquid-phase method is a synthesis technique that utilizes a liquid to produce crystals. The liquid used in the liquid-phase method may be a solution in which the raw materials are dissolved in a solvent, or it may be a molten liquid-phase raw material. Examples of the liquid-phase method that may be used include hydrothermal synthesis, solid-liquid synthesis, flux method, sol-gel method, and coprecipitation method.

According to the liquid-phase method, a low-melting alkali metal compound (in the first embodiment, a Li compound) that can be melted to form a liquid phase dissolves a high-melting, stable transition metal compound (in the first embodiment, a Ta compound), making it possible to produce a precursor having a corundum structure. Therefore, in the liquid-phase method, the synthesis reaction can be carried out at a lower temperature than in the solid-phase method, in which the synthesis reaction is performed in the solid state, and the particle size of the product can be reduced.

In the first embodiment, a hydrothermal synthesis method is used as the liquid-phase method. In the hydrothermal synthesis method, the compound is synthesized by a hydrothermal reaction, in which water used as the solvent participates in the reaction at a temperature higher than the boiling point of water and at a pressure higher than atmospheric pressure.

For hydrothermal synthesis, hydrothermal synthesis equipment such as an autoclave or a flow-type (continuous-type) hydrothermal synthesis apparatus can be used. In the first embodiment, an autoclave, which is a sealed vessel having heat resistance and pressure resistance, is used. In the first embodiment, hydrothermal synthesis is performed by placing the mixed solution into the autoclave, sealing the autoclave, and heating the autoclave in a furnace. By heating the mixed solution at a temperature higher than the boiling point of water within the sealed space of the autoclave, the pressure of the mixed solution becomes higher than atmospheric pressure.

It is more preferable for the heating time in the first heating process S11 to be from several seconds to several tens of hours. It is preferable that the heating temperature for hydrothermal synthesis in the first heating process S11 is within the range of 150°C to 1000°C, and from the viewpoint of the heat resistance of the hydrothermal synthesis apparatus, it is preferable to set the heating temperature at 500°C or lower. It is more preferable that the heating temperature for hydrothermal synthesis is within the range of 200°C to 400°C. In addition, a lower heating temperature during hydrothermal synthesis allows the particle sizes of the precursors and the target product to be reduced.

The hydrothermal synthesis may be conducted under subcritical water conditions, where the temperature and pressure of the mixed solution are lower than the critical point of water (374°C, 22.1 MPa), or under supercritical water conditions, where the temperature and pressure of the mixed solution are higher than the critical point.

In the first heating process S11, LiTaO₃ having a corundum structure and LaF₃ having a tysonite structure are formed as precursors. The precursor LiTaO₃ is a complex oxide containing multiple cations, and a composition of LiTaO₃ includes at least an alkali metal cation.

In the first heating process S11, heating the mixed solution causes La(OH)₃ and Ta₂O₅ to dissolve into the solution, thereby promoting the formation reaction of the precursors. The dissolved La(OH)₃ and Ta₂O₅ are ionized in the solution. La(OH)₃ and Ta₂O₅ do not necessarily have to be completely dissolved in the solution. It is sufficient if at least a portion of La(OH)₃ and Ta₂O₅ is dissolved.

In the first heating process S11, the formation reaction of the precursors proceeds through hydrothermal synthesis, and furthermore, the precursors react to advance the formation reaction of the target compound, which is a pyrochlore-type oxide. In other words, in the first heating process S11, the precursors LiTaO₃ and LaF₃, which are produced by hydrothermal synthesis, react to generate the target compound LLTOF. Therefore, the hydrothermal synthesis product contains the precursors LiTaO₃ and LaF₃ as well as the target compound LLTOF. In the first heating process S11, by performing hydrothermal synthesis, the reaction can proceed at a lower temperature compared to solid-state reaction, allowing the particle size of LLTOF to be reduced.

The hydrothermal synthesis product containing the precursors and the target compound is washed with water or an organic solvent (such as alcohol, acetone, and the like) as necessary, and then dried. As a result, the particulate precursors and the target compound can be obtained.

In the first embodiment, since the target compound LLTOF is obtained in the first heating process S11, the following second mixing process S12 and second heating process S13 may be performed as necessary.

### (Second Mixing Process)

Next, the second mixing process S12 is performed, in which LiF is mixed with the hydrothermal synthesis product obtained in the first heating process to obtain a mixture. The mixing of LiF with the precursors may be carried out as necessary.

### (Second Heating Process)

Next, the second heating process S13 is performed, in which the mixture of the precursors and LiF is heated and calcined. In the second heating process S13, for example, the mixture is heated at a predetermined temperature in an air atmosphere or an inert atmosphere to calcine the target compound LLTOF. The production of the target compound LLTOF by the second heating process S13 can be carried out by any desired method, such as a solid-phase reaction, liquid-phase reaction, or solid-liquid reaction.

In the second heating process S13, heating is performed at a temperature higher than the hydrothermal synthesis temperature used in the first heating process S11. In the second heating process S13 of the first embodiment, the heating temperature is set within the range of 500°C to 1000°C. It is preferable that the heating temperature in the second heating process S13 be 700°C or lower. By means of the second heating process, the target compound LLTOF can be produced from the precursors LiTaO₃ and LaF₃. Furthermore, in the second heating process S13, by heating at a temperature higher than that of the first heating process S11, the particle size of the target compound LLTOF can be increased. The particle size of the target product LLTOF increases with an increase in the heating temperature in the second heating process S13.

Through the above processes, it is possible to obtain crystals of a pyrochlore-type oxide represented by the composition formula "Li_{1.25}La_{0.58}Ta₂O₆F".

It should be noted that by changing the mixing ratio of LiF, La(OH)₃, and Ta₂O₅ in the above manufacturing process, crystals having a pyrochlore structure represented by the composition formula "Li_{2-α}La_{(1+α)/3}Ta₂O_{7-β}F_{γ}" can be obtained. By changing the mixing ratio of LiF, La(OH)₃, and Ta₂O₅, the values of α, β, and γ in the composition formula can be adjusted. In addition, when heating is performed, a portion of the material sublimates. Therefore, by changing the heating conditions, the atmosphere of the firing furnace, and the size of the firing furnace in the first heating process and the second heating process, the values of α, β, and γ can also be adjusted.

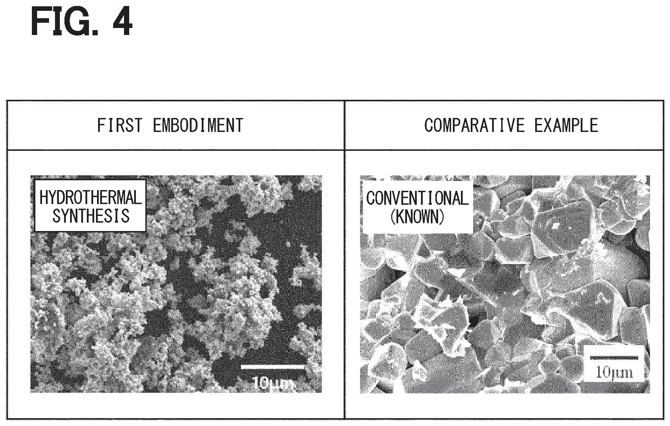

FIG. 4 shows SEM images of pyrochlore-type oxides according to the first embodiment and a comparative example. In the first embodiment, the precursors produced by hydrothermal reaction were heated to generate a pyrochlore-type oxide, while in the comparative example, the precursors produced by solid-phase reaction were heated to generate a pyrochlore-type oxide. The pyrochlore-type oxides of the first embodiment and the comparative example are LLTOF. The scale of the SEM images of the first embodiment and the comparative example is 10 µm.

In the comparative example, a mixture of La₂O₃, Li₂CO₃, and Ta₂O₅ was calcined to obtain the precursor Li_{0.5}La_{0.5}Ta₂O₆, which was then mixed with LiF and LaF₃ and calcined at 1200°C to produce LLTOF by solid-phase reaction.

As shown in FIG. 4, the particle size of the pyrochlore-type oxide in the comparative example greatly exceeds 10 µm, whereas in the first embodiment, pyrochlore-type oxides with particle sizes of several micrometers or less are obtained. Thus, in the first embodiment, the particles of the pyrochlore-type oxide can be made finer. By using the pyrochlore-type oxide of the first embodiment as the solid electrolyte 15 of the secondary battery 10, the solid electrolyte 15 can be made thinner, thereby reducing the resistance of the secondary battery 10.

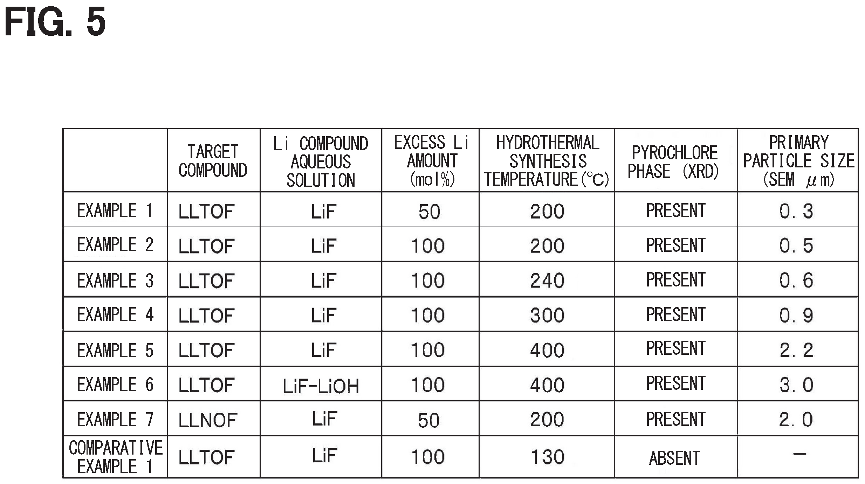

Here, particle sizes of pyrochlore-type oxides according to the first embodiment will be explained using Examples and Comparative Example shown in FIG. 5. In Examples 1 to 6, target compounds LLTOF were produced by calcining precursors obtained through hydrothermal synthesis. In Example 7, a target compound LLNOF was produced by calcining precursors obtained through hydrothermal synthesis. In Comparative Example 1, a pyrochlore-type oxide was produced by calcining precursors obtained through hydrothermal synthesis.

In Examples 1 to 5, 7, and Comparative Example 1, the Li compound was LiF, while in Example 6, the Li compounds were LiF and LiOH. The excess amount of Li relative to the target compound was 50 mol% in Examples 1 and 7, and 100 mol% in Examples 2 to 6 and Comparative Example 1.

The hydrothermal synthesis temperature was 200°C in Examples 1, 2, and 7, 240°C in Example 3, 300°C in Example 4, 400°C in Examples 5 and 6, and 130°C in Comparative Example 1.

The phases of the compounds obtained in Examples 1 to 7 and Comparative Example 1 were evaluated by X-ray diffraction (XRD) to confirm the presence or absence of the target pyrochlore phase. As a result, it was confirmed that the target pyrochlore phase was formed at least partially in Examples 1 to 6. On the other hand, in Comparative Example 1, the formation of the target pyrochlore phase could not be confirmed at all. In other words, a pyrochlore-type oxide could not be obtained at a hydrothermal synthesis temperature of 130°C.

The primary particle sizes of the obtained pyrochlore-type oxides were 0.3 µm in Example 1, 0.5 µm in Example 2, 0.6 µm in Example 3, 0.9 µm in Example 4, 2.2 µm in Example 5, 3.0 µm in Example 6, and 2.0 µm in Example 7. It should be noted that the measurement of the primary particle sizes in Examples 1 to 7 was performed using SEM-EDX in order to distinguish between the precursors and the target compound.

In Examples 1 to 7, it was possible to obtain pyrochlore-type oxides with a particle size of 3.0 µm or less. In Examples 1 to 7, the particle size of the pyrochlore-type oxide decreases with a decrease in the hydrothermal synthesis temperature. Furthermore, in Examples 1 and 2, where the hydrothermal synthesis temperature was the same, the particle size of the pyrochlore-type oxide was larger in Example 2, which had a greater excess amount of Li, than in Example 1. This is considered to be because a greater excess amount of Li increases reactivity, resulting in a larger particle size.

In the first embodiment described above, a precursor, which is a composite oxide having a corundum structure, is produced by hydrothermal synthesis in the first heating process S11. In hydrothermal synthesis, the produced precursor reacts to form a pyrochlore-type oxide. In hydrothermal synthesis reactions, the pyrochlore-type oxide can be produced at a lower temperature than in solid-state reaction, and by lowering the heating temperature, the particles of the pyrochlore-type oxide can be made finer. By using a finely particulate pyrochlore-type oxide as the solid electrolyte 15 of the secondary battery 10, the solid electrolyte 15 can be made thinner, thereby reducing the resistance of the secondary battery 10.

In addition, in the first embodiment, the composite oxide having the corundum structure, which is produced as the precursor in the first heating process S11, is calcined in the second heating process S13 to produce the pyrochlore-type oxide. In this way, the pyrochlore-type oxide can be obtained from the precursor obtained by hydrothermal synthesis. Furthermore, in the second heating process S13, the heating temperature is set higher than that of the hydrothermal synthesis in the first heating process, allowing the particle size of the pyrochlore-type oxide to be increased as needed.

In addition, in the first embodiment, hydrothermal synthesis is performed using the alkaline mixed solution. As a result, the reactivity of the hydrothermal synthesis can be improved, and the yield of the precursor can be increased.

### (Second Embodiment)

The following describes a second embodiment of the present disclosure. In the second embodiment, descriptions of portions similar to those in the first embodiment are omitted, and only different portions will be described.

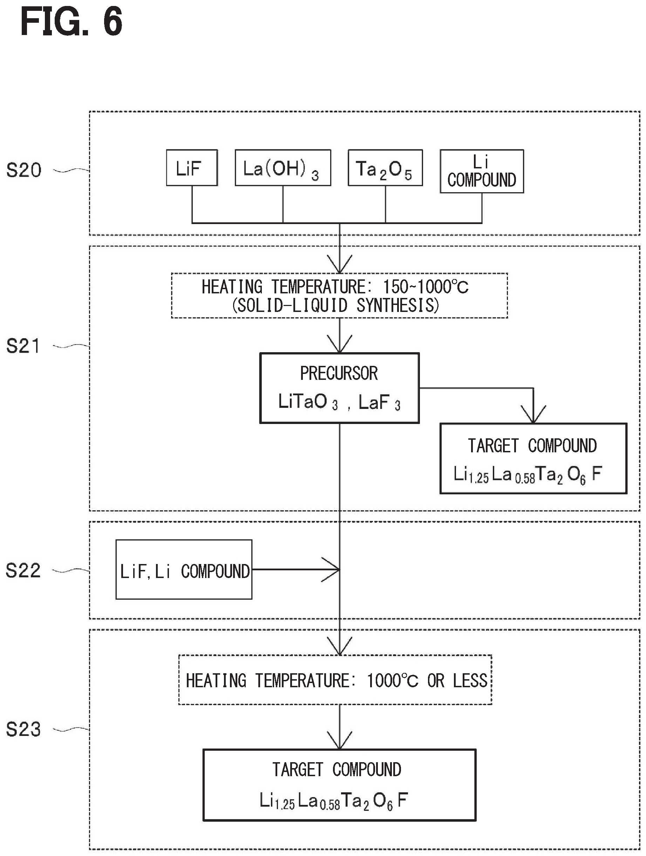

FIG. 6 shows a method for producing the solid electrolyte 15 according to the second embodiment. FIG. 6 shows the method for producing LLTOF. In the method of producing the solid electrolyte 15 according to the second embodiment, as in the first embodiment, the first mixing process S20, the first heating process S21, the second mixing process S22, and the second heating process S23 are sequentially carried out. The first mixing process S20 and the first heating process S21 correspond to the mixing process and the heating process, respectively.

In the first heating process S21 of the second embodiment, a solid-liquid synthesis method is used as the liquid-phase method. In the solid-state synthesis method, a low-melting-point alkali metal compound (in the second embodiment, a Li compound) melts to form a molten liquid, and a reaction occurs between the Li compound in the liquid phase and a transition metal compound in the solid phase (in the second embodiment, a Ta compound), making it possible to produce a precursor having a corundum structure.

### (First Mixing Process)

In the first mixing process S20, starting materials LiF, La(OH)₃, Ta₂O₅, and the Li compound are mixed to obtain a mixture. The Li compound may be, for example, LiF, LiOH, or Li₂CO₃. The amount of Li supplied as the Li compound is in excess of the stoichiometric amount relative to the target compound LLTOF. It is also permissible to add La oxides or fluorides, or raw materials derived from them, to the starting materials, or to replace the hydroxide with those compounds.

### (First Heating Process)

Next, the first heating process S21 is performed in which the mixture prepared in the first mixing process S20 is heated. In the first heating process S21, the mixture is heated at a predetermined temperature by a solid-liquid synthesis method in an atmospheric or inert atmosphere, thereby producing precursors. In the solid-liquid reaction of the first heating process S21, the Li compound containing LiF melts and becomes a liquid phase.

The heating temperature for the solid-liquid synthesis in the first heating process S21 is higher than or equal to the melting point of the Li compound, and is preferably within a range of 500°C to 1000°C. The heating temperature for the solid-liquid synthesis is more preferably within a range of, for example, 600°C to 900°C. It is not necessary for the entire amount of the Li compound to melt. It is sufficient if at least a portion of the Li compound is melted.

In the first heating process S21, LiTaO₃ having a corundum structure and LaF₃ with a tysonite structure are produced as precursors.

In the first heating process S21, the precursor formation reaction proceeds through solid-liquid synthesis, and furthermore, the precursors react to advance the formation reaction of the target compound, which is a pyrochlore-type oxide. That is, in the first heating process S21, the precursors LiTaO₃ and LaF₃ produced by solid-liquid synthesis react to form the target compound LLTOF, so the solid-liquid synthesis product contains the precursors LiTaO₃ and LaF₃ as well as the target compound LLTOF. The solid-liquid synthesis product may contain residual Li compound from the starting materials. In the first heating process S11, by performing solid-liquid synthesis, the reaction can proceed at a lower temperature compared to solid-state reaction, allowing the particle size of LLTOF to be reduced.

In the solid-liquid synthesis of the first heating process S21, heating may be performed only once or may be performed two or more times. When heating is performed twice in the first heating process S21, the temperature of the first heating may be set lower than the temperature of the second heating.

When the heat treatment is performed twice, the product obtained from the first heating may be pulverized before carrying out the second heating. The product obtained from the first heating contains precursor LiTaO₃, LaF₃, and the starting material Li compound. If necessary, the Li compound may be added during the second heating.

During the second heating, the Li compound melts and becomes a liquid phase. By pulverizing the precursor produced in the first heating, the precursor can be uniformly mixed, and the subsequent second heating can promote the reaction to form the target compound LLTOF.

In the second embodiment, since the target compound LLTOF can be obtained in the first heating process S21, the second mixing process S22 and the second heating process S23 may be performed as necessary. In the second mixing process S22, LiF and the Li compound are mixed with the solid-liquid synthesis product obtained in the first heating process S21 to obtain a mixture. In the second mixing process S22, it is acceptable to mix only LiF, or alternatively, to mix only the Li compound other than LiF. It should be noted that the second heating process S23 is the same as in the first embodiment, and thus description thereof is omitted.

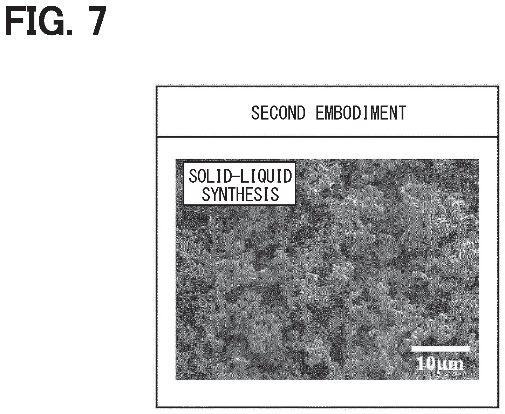

FIG. 7 shows an SEM image of the pyrochlore-type oxide according to the second embodiment. In the second embodiment, the precursors produced by the solid-liquid reaction were heated to produce the pyrochlore-type oxide. The pyrochlore-type oxide of the second embodiment is LLTOF. The scale of the SEM image in the second embodiment is 10 µm.

As shown in FIG. 7, a pyrochlore-type oxide having a particle size of several micrometers or less can be obtained by the production method according to the second embodiment. Thus, in the second embodiment, the particles of the pyrochlore-type oxide can be made finer.

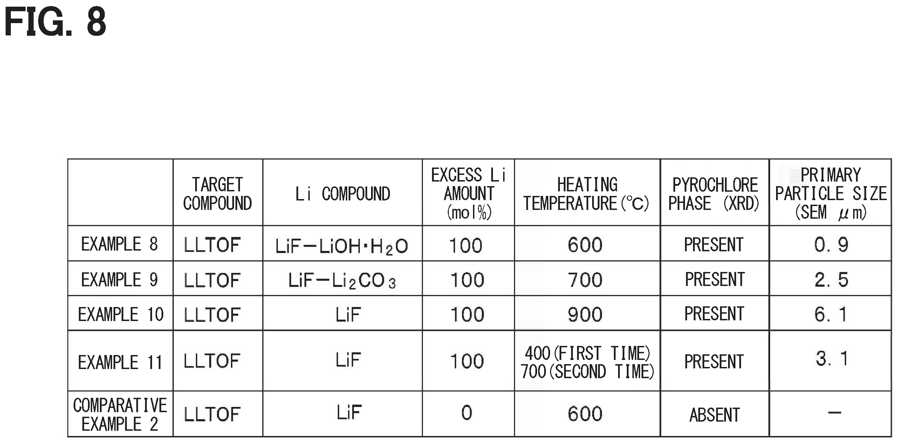

Here, particle sizes of pyrochlore-type oxides according to the second embodiment will be explained using Examples 8 to 11 and Comparative Example 2 shown in FIG. 8. In Example 2, a target compound LLTOF was produced by calcining a precursor generated by solid-liquid synthesis. In Comparative Example 2, no Li compound was added.

In Examples 10, 11, and Comparative Example 2, the Li compound was LiF. In Example 8, the Li compounds were LiF and LiOH. In Example 9, the Li compounds were LiF and Li₂CO₃. The excess Li amount relative to the target compound was 100 mol% in Examples 8 to 11, and 0 mol% in Comparative Example 2.

The solid-liquid synthesis temperature was 600°C in Example 8 and Comparative Example 2, 700°C in Example 9, and 900°C in Example 10. In Example 11, heating during solid-liquid synthesis was performed twice. The first solid-liquid synthesis temperature was 400°C, and the second solid-liquid synthesis temperature was 700°C.

The phases of the compounds obtained in Examples 8 to 11 and Comparative Example 2 were evaluated by X-ray diffraction (XRD) to confirm the presence or absence of the target pyrochlore phase. As a result, it was confirmed that the target compound, the pyrochlore phase, was generated at least partially in Examples 8 to 11. On the other hand, in Comparative Example 2, the formation of the target compound, the pyrochlore phase, could not be confirmed at all. In other words, when the excess Li amount was 0 mol%, the pyrochlore-type oxide was not obtained.

The primary particle sizes of the obtained pyrochlore-type oxides were 0.9 µm in Example 8, 2.5 µm in Example 9, 6.1 µm in Example 10, and 3.1 µm in Example 11. It should be noted that the measurement of the primary particle sizes in Examples 8 to 11 was performed using SEM-EDX in order to distinguish between the precursors and the target compound.

In Examples 8 to 11, the pyrochlore-type oxides having particle sizes of 6.1 µm or less could be obtained. Particularly, in Examples 8, 9, and 11, where the solid-liquid synthesis temperature was 700°C or lower, the pyrochlore-type oxides having particle sizes of 3.1 µm or less could be obtained. In other words, the particle size of the pyrochlore-type oxide decreases with a decrease in the solid-liquid synthesis temperature.

In the second embodiment described above, a precursor, which is a composite oxide having a corundum structure, is produced by solid-liquid synthesis in the first heating process S21. In solid-liquid synthesis, the produced precursor reacts to form a pyrochlore-type oxide. In the solid-liquid synthesis reaction, the pyrochlore-type oxide can be produced at a lower temperature than in a solid-phase reaction, and by lowering the heating temperature, the particles of the pyrochlore-type oxide can be made finer.

The present disclosure is not limited to the above-described embodiments, and can be variously modified as follows within the scope that does not deviate from the gist of the present disclosure. The means disclosed in the individual embodiments may be appropriately combined as long as the combination is feasible.

For example, in the above-described embodiments, the pyrochlore-type oxides of the present disclosure are applied to the solid electrolyte of the lithium-ion battery, but the pyrochlore-type oxides of the present disclosure may also be applied to other secondary batteries. Specifically, when K is used as the alkali metal represented by Aa in the composition formula of the pyrochlore-type oxide, it can be used as a solid electrolyte for potassium-ion batteries. When Na is used as the alkali metal represented by Aa in the composition formula, it can be used as a solid electrolyte for sodium-ion batteries.

Furthermore, in the above-described embodiments, hydrothermal synthesis in the first heating process S11 was performed using the alkali metal fluoride (specifically, LiF), but hydrothermal synthesis may also be performed using an alkali metal compound other than a fluoride (for example, a hydroxide). In this case, since a precursor produced by hydrothermal synthesis does not contain the F element, a compound containing the F element may be mixed with the precursor in the second mixing process S12, and firing may be performed in the second heating process S13, thereby obtaining a pyrochlore-type oxide containing F element as the anion X.

The features of the method for producing the pyrochlore-type oxide disclosed in the present specification are as follows.

### (First Feature)

A method for producing a pyrochlore-type oxide containing a plurality of cations, including an alkali metal cation, in a composition, includes a mixing process (S10, S20) in which a plurality of raw materials, each containing one of the plurality of cations, are mixed, and a heating process (S11, S21) in which a mixture containing the plurality of raw materials is heated by a liquid-phase method at a predetermined temperature to produce a composite oxide having a corundum structure and containing at least the alkali metal cation in a composition.

### (Second Feature)

In the method for producing the pyrochlore-type oxide according to the first feature, at least one of the plurality of raw materials is at least partially dissolved or melted in the liquid-phase method.

### (Third Feature)

In the method for producing the pyrochlore-type oxide according to the first feature or the second feature, the liquid-phase method is a hydrothermal synthesis method.

### (Fourth Feature)

In the method for producing the pyrochlore-type oxide according to the first feature or the second feature, the predetermined temperature is within a range of 150°C to 1000°C.

### (Fifth Feature)

In the method for producing the pyrochlore-type oxide according to any one of the first to fourth features, a liquid used in the liquid-phase method is a solution or melt of an alkali metal compound containing the alkali metal cation.

### (Sixth Feature)

In the method for producing the pyrochlore-type oxide according to any one of the first to fifth features, a liquid used in the liquid-phase method is alkaline.

### (Seventh Feature)

In the method for producing the pyrochlore-type oxide according to any one of the first to sixth features, the pyrochlore-type oxide produced from the composite oxide has a particle size on an order of nanometers to micrometers.

### (Eighth Feature)

In the method for producing the pyrochlore-type oxide according to any one of the first to seventh features, the heating process is defined as a first heating process, and the method further includes a second heating process (S13) in which the composite oxide produced in the first heating process is heated to produce the pyrochlore-type oxide.

### (Ninth Feature)

In the method for producing the pyrochlore-type oxide according to any one of the eighth feature, a heating temperature in the second heating process is higher than a heating temperature in the first heating process.

### (Tenth Feature)

In the method for producing the pyrochlore-type oxide according to any one of the first to ninth features, each of the plurality of raw materials includes at least one selected from a group consisting of fluorides, acetates, chlorides, hydroxides, carbonates, and oxides.

### (Eleventh Feature)

In the method for producing the pyrochlore-type oxide according to any one of the first to eleventh features, wherein the pyrochlore-type oxide is an electrolyte (15) for a secondary battery.

Although the present disclosure has been described in accordance with the embodiments, it is understood that the present disclosure is not limited to such embodiments or structures. To the contrary, the present disclosure is intended to cover various modification and equivalent arrangements. In addition, while the various elements are shown in various combinations and configurations, which are exemplary, other combinations and configurations, including more, less or only a single element, are also within the spirit and scope of the present disclosure.

## Claims

1. A method for producing a pyrochlore-type oxide containing a plurality of cations, including an alkali metal cation, in a composition, the method comprising:
a mixing process (S10, S20) in which a plurality of raw materials, each containing one of the plurality of cations, are mixed; and
a heating process (S11, S21) in which a mixture containing the plurality of raw materials is heated by a liquid-phase method at a predetermined temperature to produce a composite oxide having a corundum structure and containing at least the alkali metal cation in a composition.

2. The method for producing the pyrochlore-type oxide according to claim 1, wherein, in the liquid-phase method, at least one of the plurality of raw materials is at least partially dissolved or melted.

3. The method for producing the pyrochlore-type oxide according to claim 1, wherein the liquid-phase method is a hydrothermal synthesis method.

4. The method for producing the pyrochlore-type oxide according to claim 1, wherein the predetermined temperature is within a range of 150°C to 1000°C.

5. The method for producing the pyrochlore-type oxide according to claim 1, wherein a liquid used in the liquid-phase method is a solution or melt of an alkali metal compound containing the alkali metal cation.

6. The method for producing the pyrochlore-type oxide according to claim 1, wherein a liquid used in the liquid-phase method is alkaline.

7. The method for producing the pyrochlore-type oxide according to claim 1, wherein the pyrochlore-type oxide produced from the composite oxide has a particle size on an order of nanometers to micrometers.

8. The method for producing the pyrochlore-type oxide according to claim 1, wherein the heating process is defined as a first heating process, and the method further comprising a second heating process (S13) in which the composite oxide produced in the first heating process is heated to produce the pyrochlore-type oxide.

9. The method for producing the pyrochlore-type oxide according to claim 7, wherein a heating temperature in the second heating process is higher than a heating temperature in the first heating process.

10. The method for producing the pyrochlore-type oxide according to claim 1, wherein each of the plurality of raw materials includes at least one selected from a group consisting of fluorides, acetates, chlorides, hydroxides, carbonates, and oxides.

11. The method for producing the pyrochlore-type oxide according to any one of claims 1 to 10, wherein the pyrochlore-type oxide is an electrolyte (15) for a secondary battery.
